# EUROPEAN PATENT SPECIFICATION

(11) **EP 2 094 786 B1**
(45) Date of publication and mention of the grant of the patent: **27.11.2013**
(21) Application number: 06835549.4
(22) Date of filing: 28.12.2006
(51) Int. Cl.: C08L 69/00, C08L 67/02, C08L 51/04, C08K 5/521

(54) **FLAMEPROOF THERMOPLASTIC RESIN COMPOSITION**
FLAMMENSICHERE THERMOPLASTISCHE HARZZUSAMMENSETZUNG
COMPOSITION DE RÉSINE THERMOPLASTIQUE IGNIFUGE

(30) Priority: 23.11.2006 KR 20060116465
(43) Date of publication of application: 02.09.2009
(73) Proprietor: Cheil Industries Inc., Gumi-si, Gyeongsangbuk-do 730-710 (KR)
(72) Inventor: JUNG, In Chul, Seoul 157-013 (KR); JANG, Bok Nam, Anyang-si Gyeonggi-do 431-792 (KR); PARK, Hee Jung, Guri-si Gyeonggi-do 471-754 (KR); YUN, Jung Hwan, Uiwang-si Gyeonggi-do (KR); CHOI, Jin Hwan, Anyang-si Gyeonggi-do 431-737 (KR)
(74) Representative: Bublak, Wolfgang
(86) International application number: PCT/KR2006/005849
(87) International publication number: WO 2008/062924

(56) References cited:
- JP-A- 2004 244 600
- US-A- 5 674 928
- US-A1- 2002 016 410
- US-A1- 2004 039 090
- US-A1- 2004 058 174
- US-A1- 2004 152 808
- US-B1- 6 306 941
- US-B1- 6 590 015

## Description

### Technical Field

The present invention relates to a halogen-free flameproof thermoplastic resin composition. More particularly, the present invention relates to a flameproof thermoplastic resin composition having good flame retardancy and impact resistance, which comprises a rubber modified aromatic vinyl copolymer resin, a polycarbonate resin, two types of polyester resins (a semi-ciystalline polyester resin and a non-crystalline polyester), and an aromatic phosphate ester compound.

### Background Art

Styrenic resins can have excellent mold processability, impact strength, and appearance and have accordingly been widely used in the production of many electric or electronic goods. When a rubber modified aromatic vinyl copolymer resin is used in the production of heat-emitting products, the resin should further have flame retardancy.

It is well known to add a halogen-containing compound and an antimony-containing compound to a rubber modified aromatic vinyl copolymer resin to give the resin good flame-retardant properties. However, polybromodiphenyl ether, widely used as the halogen-containing flame retardant, has been known to be fatally harmful since the mid-1980 in Europe. So, a major concern in this field is to develop a flame retardant-rubber modified aromatic vinyl copolymer resin which is prepared without a halogen-containing compound.

It is well known to employ a phosphorous, silicon, boron, or nitrogen compound as a halogen-free flame retardant for a resin composition. However, such compounds cannot impart sufficient flame retardancy.

Journal of Polymer (Elsevier Science, 1975, vol. 16, pp615-620*)* discloses that the rubber modified styrene-containing resin has a low Limiting Oxygen Index (LOI), because it does not form char during thermogravimetric analysis (TGA) and combustion. In the case of halogen-containing compounds, these compounds can readily impart a desired degree of flame-retardancy regardless of the kinds of resin. On the other hand, it is difficult to provide the rubber modified styrene-containing resins which do not form char with sufficient flame retardancy by using only phosphorous- or nitrogen- flame retardants, because these non halogenated flame retardants typically act on a solid phase.

In order to solve the above problems, U.S. patent Nos. 5,061,745, 5,204,394, and 5,674,924 disclose resin compositions that acquire flame retardancy by blending a rubber modified aromatic vinyl copolymer resin, a polycarbonate which makes it easy to impart flame retardancy to the rubber modified aromatic vinyl copolymer resin, and a phosphate ester compound. However, it is necessary to use a relatively high amount of polycarbonate (at least 60 parts by weight) in order to obtain sufficient flame retardancy.

U.S. patent Nos. 4,618,633 and 6,716,900 disclose compositions which introduce a polyphenylene ether resin having higher char-forming ability than polycarbonate to a rubber modified styrene copolymer resin. However, special attention is needed to mold the blend of the polyphenylene ether resin and the rubber modified styrene copolymer resin, because there is a big difference in moldable temperature between the polyphenylene ether resin and the rubber modified styrene copolymer resin. In general, the polyphenylene ether resin is an engineering plastic molded at a high temperature. In contrast, the rubber modified styrene copolymer resin is molded at a relatively low temperature. Furthermore, the polycarbonate and the polyphenylene ether resin are expensive compared to other resins, resulting in an increased production cost.
US 2004/039090 discloses flame retardant thermoplastic molding compositions having good heat deformation resistance, and especially high resistance to stress cracking and chemical attack, comprising 40-95 parts by weight of A) an aromatic polycarbonate and/or polyester carbonate, 0.5-30 parts by weight of B) a polyalkylene terephthalate, 0.5-30 parts by weight of C) a graft polymer, including an acrylonitrile-butadiene-styrene (ABS) copolymer, 0.5-25 parts by weight of D) a bisphenol A bridged oligomeric phosphoric acid ester, and optionally E) a fluorinated polyolefin.
JP2004 244600 discloses polyester polycarbonate resin compositions having excellent impact strength, heat-resistance, solvent resistance, dimensional stability, and flame retardancy. The composition is obtained by blending 100 weight parts of mixed resins comprising 10-90 wt. % of polyester (A) including polyethylene terephthalate and 90-10 wt.% of polycarbonate (B), with 2-10 weight parts of copolyester containing 3-15 mol% of cyclohexane dimethanol in diol structural unit, and 2-10 weight parts of olefin-type copolymer. The composition is further blended with 5-25 weight parts of condensed phosphoric acid ester group flame retardant.

The present researchers had developed a resin composition comprising a rubber modified aromatic vinyl copolymer resin, a polycarbonate and a polyethylene terephthalate resin. The polyethylene terephthalate resin has aromatic rings and oxygen atoms in the main chain, which tend to form char. However, when the polyethylene terephthalate resin is a crystalline polymer and is blended with polycarbonate resin, there is a problem of deterioration of impact resistance due to phase separation.

The present inventors have developed a resin composition which has excellent flame retardancy without deterioration of impact resistance by adding two types of polyester resins, a semi-crystalline polyester and a noncrystalline polyester, to a blend of a rubber modified aromatic vinyl copolymer resin, a polycarbonate resin, and an aromatic phosphate ester compound.

### Disclosure of Invention

### Technical Problem

An object of the present invention is to provide a halogen-free flameproof thermoplastic resin composition.

Another object of the present invention is to provide a thermoplastic resin composition having excellent flame retardancy by using a polycarbonate resin, and two types of polyester resins, a semi-crystalline polyester resin and a noncrystalline polyester resin, as a char source.

A further object of the present invention is to provide an environmently friendly flameproof thermoplastic resin composition having excellent economical efficiency and impact strength.

Other objects and advantages of this invention will be apparent from the ensuing disclosure and appended claims.

### Technical Solution

A flameproof thermoplastic resin composition according to the present invention comprises (A) 5∼40 parts by weight of a rubber modified aromatic vinyl copolymer resin; (B) 30∼90 parts by weight of a polycarbonate resin; (C) 1~60 parts by weight of a polyester resin comprising (c1) 0.01∼99 % by weight of a semi-crystalline polyester resin and (c2) 1∼99.99 % by weight of a non-crystalline polyester resin; and (D) 5∼30 parts by weight of an aromatic phosphate ester compound, per 100 parts by weight of a base resin comprising (A), (B) and (C).

### Best Mode for Carrying Out the Invention

(A) A rubber modified aromatic vinyl copolymer resin

The rubber modified aromatic vinyl copolymer resin according to the present invention is a polymer resin wherein grafted rubbery polymers are dispersed in the form of particles in a matrix of vinyl copolymer. The rubber modified aromatic vinyl copolymer resin can be prepared by polymerizing aromatic vinyl monomer and a monomer copolymerizable with said aromatic vinyl monomer in the presence of a rubbery polymer. The rubber modified aromatic vinyl resins are prepared by known methods such as emulsion polymerization, solution polymerization, suspension polymerization or bulk polymerization.

The rubber modified aromatic vinyl copolymer resin is produced by preparing separately a grafted copolymer resin (a1) typically having high rubber content and an aromatic vinyl copolymer resin (a2) which does not contain rubber and mixing them together. In a bulk polymerization, the rubber modified aromatic vinyl copolymer resin can be prepared in one process without separately preparing the grafted copolymer resin (a1) and the aromatic vinyl copolymer resin (a2).

In either case, the rubber content in a final modified aromatic vinyl copolymer resin is preferably 5 to 30 parts by weight.

Examples of the rubber modified aromatic vinyl copolymer resins may include acrylonitrile-butadiene-styrene copolymer resin (ABS), acrylonitrile-styrene-acrylic rubber copolymer resin (ASA), acrylonitrile-ethylene propylene rubber-styrene copolymer resin (AES), methylmethacrylate-butadiene-styrene copolymer resin (MBS), and the like.

In the rubber modified aromatic vinyl copolymer resin, a graft copolymer resin can be used alone or in combination with a copolymer resin taking into account the compatibility thereof. In exemplary embodiments of the invention, the rubber modified aromatic vinyl copolymer resin comprises 20∼100 parts by weight of an aromatic vinyl-acrylonitrile graft copolymer resin (a1) and 0~80 parts by weight of an aromatic vinyl-acrylonitrile copolymer resin (a2).

The rubber modified aromatic vinyl copolymer resin (A) of the present invention is used in the amount of 5∼40 parts by weight.

(a1) Aromatic vinyl graft copolymer resin

The aromatic vinyl graft copolymer resin of the present invention may be prepared by adding an aromatic vinyl monomer and a monomer copolymerizable with said aromatic vinyl monomer to a rubbery polymer and polymerizing them together.

Examples of the rubbery polymer for preparing the aromatic vinyl graft copolymer resin may include diene rubbers such as butadiene rubber, styrene-butadiene copolymer, acrylonitrile-butadiene copolymer; saturated rubbers in which hydrogen is added to said diene rubbers, isoprene rubbers, acrylic rubbers such as butyl acrylate; and ethylene/propylene/diene terpolymers (EPDM). It is preferable to use a diene rubber, more preferably a butadiene rubber. The content of the rubber in the aromatic vinyl graft copolymer resin (a1) may be 10∼60 parts by weight. The average size of rubber particles may be in the range of from about 0.05 to 4 □ to provide good impact strength and surface appearance.

Examples of the aromatic vinyl monomer graft-copolymerized onto the rubber may include styrene, α-methylstyrene, nuclear-substituted styrene. These can be used as a mixture of at least two. Among them, styrene is preferred. The content of the aromatic vinyl monomer in the aromatic vinyl graft copolymer resin (a1) may be 20~80 parts by weight.

Examples of the monomer copolymerizable with said aromatic vinyl monomer may include acrylonitrile, methylmethacrylonitrile, methylmethacrylate, N-substituted maleimide, maleic anhydride. These can be used as a mixture of at least two. Among them, acrylonitrile is preferred. The content of the copolymerizable monomer in the aromatic vinyl graft copolymer resin (a1) may be 5∼45 parts by weight.

(a2) Aromatic vinyl copolymer resin

The aromatic vinyl copolymer resin of the present invention may be prepared by copolymerizing an aromatic vinyl monomer and a monomer copolymerizable with said aromatic vinyl monomer.

Examples of the aromatic vinyl monomer may include styrene, α-methylstyrene, nuclear-substituted styrene. These can be used as a mixture of at least two. Among them, styrene is preferred. The content of the aromatic vinyl monomer in the aromatic vinyl copolymer resin (a2) may be 50∼95 parts by weight.

Examples of the monomer copolymerizable with said aromatic vinyl monomer may include acrylonitrile, methylmethacrylonitriie, methylmethacrylate, N-substituted maleimide, maleic anhydride. These can be used as a mixture of at least two. Among them, acrylonitrile is preferred. The content of the copolymerizable monomer in the aromatic vinyl copolymer resin (a2) may be 5~50 parts by weight.

(B) Polycarbonate resin

The polycarbonate resin is prepared by reacting a diphenol represented by the following formula 1 with a phosgene, a halogen formate or a carbonic acid diester:

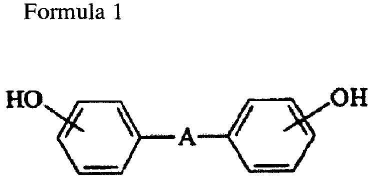

wherein A is a single bond, a C₁₋₅ alkylene group, a C₁₋₅ alkylidene group, a C₅₋₆ cycloalkylidene group, S or SO₂.

Examples of the diphenol may include 4,4'-dihydroxydiphenol, 2,2-bis-(4-hydroxyphenyl)-propane, 2,4-bis-(4-hydroxyphenyl)-2-methylbutane, 1,1-bis-(4-hydroxyphenyl)-cyclohexane, 2,2-bis-(3-chloro-4-hydroxyphenyl)-propane, 2,2-bis-(3,5-dichloro-4-hydroxyphenyl)-propane. More preferable diphenols are 2,2-bis-(4-hydroxyphenyl)-propane, 2,2-bis-(3,5-dichloro-4-hydroxyphenyl)-propane, and 1,1-bis-(4-hydroxyphenyl)-cyclohexane, and a most preferable diphenol is 2,2-bis-(4-hydroxyphenyl)-propane called 'bisphenol A'. In the present invention, the polycarbonate resin (A) may have a weight average molecular weight (M_{w}) of 10,000 to 200,000, more preferably 15,000 to 80,000.

Suitable polycarbonates incorporated into the composition of the present invention may be branched in a known manner, preferably by incorporation 0.05 to 2 mol %, based on the total quantity of diphenols used, of tri- or higher functional compounds, for example, those with three or more phenolic groups.

The polycarbonate resin is used in an amount of 30 to 90 parts by weight. The polycarbonate resin may make it easier to impart flame retardancy to the resin composition. So, if the amount of the polycarbonate resin is less than 30 parts by weight, flame retardancy and mechanical strength of the resin composition may be deteriorated.

(C) Polyester resin

The polyester resin (C) according to the present invention comprises semi-crystalline polyester resin (c1) and noncrystalline polyester resin (c2). The semi-crystalline and the noncrystalline polyester resin may act as a char source. Especially, the noncrystalline polyester resin acts as a compatibilizer between polycarbonate and semi-crystalline polyester resin. The polyester resin along with the rubber modified aromatic vinyl copolymer resin and the polycarbonate resin constitutes a base resin.

The polyester resin (C) comprises 0.01∼99 % by weight of the semi-crystalline polyester resin (c1) and 1∼99.99 % by weight of the noncrystalline polyester resin (c2).

The polyester resin (C) of the present invention may be polyalkylterephthalate or polyalkylenenaphthalate.

In exemplary embodiments of the invention, the polyester resin (C) may be selected from the group consisting of polyethyleneterephthalate (PET), polybutyleneterephthalate (PBT), polycyclohexaneterephthalate (PCT), polyethylenenaphthalate (PEN), and mixtures thereof.

The polyester resin may be used in an amount of 1∼60 parts by weight, per 100 parts by weight of the base resin.

(c1) semi-ciystalline polyester resin

Most polyester resin typically used is a semi-crystalline polyester resin which is commercially available. The semi-ciystalline polyester resin (c1) of the present invention may include, but is not limited to, polyethylene terephthalate (PET), polybutyleneterephthalate (PBT), polycyclohexaneterephthalate (PCT), polyethylenenaphthalate (PEN), and mixtures thereof. Recycled semi-crystalline polyester resins can also be used.

(c2) noncrystalline polyester resin

The noncrystalline polyester resin (c2) may act as a compatibilizer between polycarbonate and semi-crystalline polyester resin, so that impact strength of the resin composition may improve.

The noncrystalline polyester resin (c2) of the present invention may be prepared by reacting at least two dialcohols with dicarboxyl acid or reacting at least two dicarboxyl acids such as isophthalic acid and terephthalic acid with dialcohol. The use of at least two dialcohols or at least two dicarboxyl acids drops the regularity of polymer chain, thereby inhibiting the crystallization of polyester resin, so that the noncrystalline polyester resin can be obtained.

As for the noncrystalline polyester resin (c2), glycol-modified polyalkylene terephthalate, such as poly (alkylene-1,4-cyclohexanedimethyleneterephthalate) can be used. Examples of the noncrystalline polyester resin may include poly(ethylene-1,4-cyclohexanedimethyleneterephthalate) (PETG), poly(butylene-1,4-cyclohexanedimethyleneterephthalate). The noncrystalline polyester resin can be used alone or in combination therewith.

The poly(ethylene-1,4-cyclohexanedimethyleneterephthalate) may be prepared by esterification of terephthalic acid with ethylene glycol and 1,4-cyclohexanedimethanylol (CHDM) as comonomers followed by polycondensation of the resulting ester, which can be easily carried out by an ordinary skilled person in the art.

(D) Aromatic phosphate ester compound

The aromatic phosphate ester compound of the present invention is used as a flameproof agent. The aromatic phosphate ester compound is represented as following Formula 2, but not limited thereto.

The aromatic phosphate ester compound may be used in an amount of 5∼30 parts by weight, preferably 10∼20 parts by weight, per 100 parts by weight of base resin. If the amount is less than 5 parts by weight, the resin composition cannot have sufficient flame retardancy. On the other hand, if the amount is more than 30 parts by weight, the heat resistance and mechanical strength of the resin composition may be deteriorated.

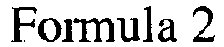

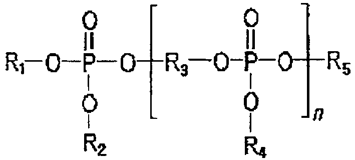

wherein R₁, R₂, R₄, and R₅ are independently C₆-C₂₀ aryl group or an alkyl-substituted C₆-C₂₀ aryl group, R₃ is a derivative from a dialcohol comprising resorcinol, hydroquinol, bisphenol-A, bisphenol-S; and n is 0∼5.

□) Where n is 0, the compound represented in the Formula 2 includes triphenylphosphate, tricresylphosphate, cresyldiphenylphosphate, trixylenylphosphate, tri(2,4,6-trimethylphenyl)phosphate, tri(2,4-ditertiarybutylphenyl)phosphate, tri(2,6-ditertiarybutylphenyl)phosphate.

□) Where n is 1, the compound represented in the Formula 2 includes resorcinolbis(diphenylphosphate), hydroquinolbis(diphenylphosphate), bisphenolA-bis(diphenylphosphate), resorcinolbis(2,6-ditertiarybutylphenylphosphate), hydroquinolbis(2,6-dimethylphenylphosphate).

D) Where n is 2 or more, the compound may be a mixture of oligomer types.

The aromatic phosphate ester compound can be used alone or in combination therewith.

As for the aromatic phosphate ester compound, other conventional phosphorous-containing flame retardants such as red phosphorous, phosphonates, phophinates, phosphazenes can be replaced partially or totally.

The thermoplastic resin composition may further contain anti-dripping agents, impact modifiers, antioxidants, plasticizers, heat stabilizers, light stabilizers, compatibilizers, pigments, dyes, inorganic fillers or a mixture of at least two thereof.

The anti-dripping agent may include a fluorinated polyolefin resin such as polyte-trafluorethylene.

The inorganic filler may include glass fiber, silica, talc, ceramic. The inorganic filler is employed in an amount of about 0.01 to 50 parts by weight, per 100 parts by weight of the base resin in order to obtain desired effects and physical balance of the resin composition.

The resin composition according to the present invention can be prepared using conventional methods. For example, all the components and additives can be mixed together and extruded through an extruder and can be prepared in the form of pellets.

The resin composition according to the present invention can be useful in the production of various articles. The resin composition is especially suitable for a housing for electric or electronic goods.

In exemplary embodiments of the invention, the resin composition can be formed into a housing for electronic goods such as printers, computers, word processors, keyboards, PDAs, telephones, mobile phones, facsimiles, copy machines, ECRs, electronic calculators, cards, washing machines, refrigerators, vacuum cleaners, microwave ovens, irons, TV, VTR, DVD players, video cameras, cassette recorders, CD players, speakers, game machines, LCDs, MP3 players.

The present invention may be better understood by reference to the following examples that are intended for the purpose of illustration and are not to be construed as in any way limiting the scope of the present invention, which is defined in the claims appended hereto. In the following examples, all parts and percentage are by weight unless otherwise indicated.

### Mode for the Invention

**Examples**

(A) A rubber modified aromatic vinyl resin

The rubber modified aromatic vinyl resin is prepared by mixing 40 parts by weight of the aromatic vinyl graft copolymer resin (a1) and 60 parts by weight of aromatic vinyl copolymer resin (a2).

(a1) Aromatic vinyl graft copolymer resin: graft ABS copolymer resin

50 parts of butadiene rubber latex (solid content), 36 parts of styrene, 14 parts of acrylonitrile, and 150 parts of deionized water are mixed. To the mixture, 1.0 part of potassium oleate, 0.4 parts of cumen hydroperoxide, 0.2 parts of mercaptan-containing chain transfer agent, 0.4 parts of glucose, 0.01 parts of ferrous sulfate hydrate, and 0.3 parts of sodium pyrophosphate are added. The blend is kept at 75 °C for 5 hours to obtain g-ABS latex. To the g-ABS latex, 0.4 parts of sulfuric acid is added, coagulated and dried to obtain graft ABS copolymer resin (g-ABS) in powder form.

(a2) Aromatic vinyl copolymer resin: SAN copolymer resin

72 parts of styrene, 28 parts of acrylonitrile, 120 parts of deionized water and 0.2 parts of azobisisobutylonitrile (AIBN) are mixed. To the mixture, 0.4 parts of tricalciumphosphate and 0.2 parts of mercaptan-containing chain transfer agent are added. The resultant solution is heated to 80 °C for 90 minutes and kept for 240 minutes. The resultant is washed, dehydrated and dried to obtain styrene-acrylonitrile copolymer resin (SAN) in powder form. The weight average molecular weight of the styrene-acrylonitrile copolymer resin is 180,000∼200,000.

(B) Polycarbonate resin

Panlite L-1225 Grade manufactured by Teijin company of Japan is used.

(C) Polyester resin

(c1) semi-crystalline polyethylene terephthalate resin (PET)

PET1100A Grade manufactured by Any Chem Co., Ltd. is used.

(c1') semi-crystalline polybutylene temphthalate resin (PBT)

1700S Grade manufactured by Samyang Company is used.

(c2) noncrystalline polyester resin (PETG)

SKYGREEN K2012 Grade manufactured by SK Chemical Company is used.

(D) Aromatic phosphate ester compound

PX-200 Grade manufactured by DAIHACHI Chemistry of Japan is used.

**Examples 1∼6 and Comparative Examples 1∼3**

The components as shown in Table 1 are mixed and the mixture is extruded at 220-250 °C with a conventional twin-screw extruder into pellets. The resin pellets are dried at 80 °C for 3 hours, and molded into test specimens for measuring flame retardancy using a 6 oz injection molding machine at 230 °C and mold temperature of 60 °C. The flame retardancy is measured in accordance with UL94 under a thickness of 2.5 mm. The Izod impact strength is measured in accordance with ASTM 256A under a thickness of 1/8".

**Table 1**

| (parts by weight) | | | | | | | | | | |
|---|---|---|---|---|---|---|---|---|---|---|
| | | Examples | | | | | | ComparativeExamples | | |
| | | 1 | 2 | 3 | 4 | 5 | 6 | 1 | 2 | 3 |
| (A) | | 20 | 10 | 20 | 25 | 25 | 25 | 20 | 20 | 30 |
| (B) | | 40 | 60 | 50 | 45 | 45 | 45 | 40 | - | - |
| (C) | (c1) | 30 | 20 | 25 | 20 | 15 | - | 40 | 80 | 70 |
| | (c1') | - | - | - | - | 5 | 20 | - | - | - |
| | (c2) | 10 | 10 | 5 | 10 | 10 | 10 | - | - | - |
| (D) | | 18 | 18 | 18 | 18 | 18 | 18 | 18 | 18 | 18 |
| 1/8" Izod impact strength(kgf·cm/cm) | | 50 | 45 | 53 | 58 | 57 | 55 | 13 | 10 | 12 |
| Flame Retardancy(UL 94, 2.5mm thickness) | | V-0 | V-0 | V-0 | V-0 | V-0 | V-0 | V-0 | Fail | Fail |

As shown above, Examples 1∼6 show excellent impact strength as well as V-0 flame retardancy. However, Comparative Example 1 shows poor impact strength, although it obtains V-0 flame retardancy. Comparative Examples 2 and 3 show that the impact strength and flame retardancy are deteriorated although they employ the same amount of flame retardant as the Examples.

The present invention was described based on the specific preferred embodiments, but it should be apparent to those ordinarily skilled in the art that various changes and modifications can be added without departing from the scope of the present invention which will be defined in the appended claims.

## Claims

1. A flameproof thermoplastic resin composition, which comprises:
(A) 5∼40 parts by weight of a rubber modified aromatic vinyl copolymer resin;
(B) 30∼90 parts by weight of a polycarbonate resin;
(C) 1∼60 parts by weight of a polyester resin comprising (c1) 0.01∼99 % by weight of a semi-crystalline polyester resin and (c2) 1∼99.99 % by weight of a noncrystalline polyester resin; and
(D) 5∼30 parts by weight of an aromatic phosphate ester compound, per 100 parts by weight of a base resin comprising (A), (B) and (C).

2. The flameproof thermoplastic resin composition of Claim 1, wherein said rubber modified aromatic vinyl copolymer resin comprises (a1) 20∼100 parts by weight of an aromatic vinyl graft copolymer resin, and (a2) 0∼80 parts by weight of an aromatic vinyl copolymer resin.

3. The flameproof thermoplastic resin composition of Claim 2, wherein said aromatic vinyl graft copolymer resin (a1) is a graft copolymer of 10∼60 parts by weight of a rubbery polymer, 20∼80 parts by weight of an aromatic vinyl monomer, and 5∼45 parts by weight of a monomer copolymerizable with the aromatic vinyl monomer; and said aromatic vinyl copolymer resin (a2) is a copolymer of 50∼95 parts by weight of an aromatic vinyl monomer, and 5~50 parts by weight of a monomer copolymerizable with the aromatic vinyl monomer.

4. The flameproof thermoplastic resin composition of Claim 3, wherein said rubbery polymer is selected from the group consisting of diene rubbers, saturated rubbers in which hydrogen is added to said diene rubbers, isoprene rubbers, chloroprene rubbers, acrylic rubbers, ethylene/propylene/diene terpolymers (EPDM), and mixtures of at least two thereof; and said aromatic vinyl monomer is selected from the group consisting of styrene, α-methylstyrene, nuclear-substituted styrene, and mixtures of at least two thereof; and said monomer copolymerizable with the aromatic vinyl monomer is selected from the group consisting of acrylonitrile, methylmethacrylonitrile, methylmethacrylate, N-substituted maleimide, maleic anhydride, and mixtures of at least two thereof.

5. The flameproof thermoplastic resin composition of Claim 1, wherein said rubber modified aromatic vinyl copolymer resin (A) is selected from the group consisting of acrylonitrile-butadiene-styrene copolymer resin (ABS), acrylonitrile-styrene-acrylic rubber copolymer resin (ASA), acrylonitrile-ethylene propylene rubber-styrene copolymer resin (AES), and mixtures of at least two thereof.

6. The flameproof thermoplastic resin composition of Claim 1, wherein said semi-crystalline polyester resin (c1) is polyalkylene terephthalate or polyalkylene naphthalate.

7. The flameproof thermoplastic resin composition of Claim 6, wherein said semi-crystalline polyester resin (c1) is selected from the group consisting of polyethyleneterephthalate (PET), polybutyleneterephthalate (PBT), polycyclohexaneterephthalate (PCT), polyethylenenaphthalate (PEN), and mixtures thereof.

8. The flameproof thermoplastic resin composition of Claim 1, wherein said noncrystalline polyester resin (c2) is poly(alkylene-1,4-cyclohexane dimethyleneterephthalate).

9. The flameproof thermoplastic resin composition of Claim 1, wherein said aromatic phosphate ester compound (D) is represented by the following Formula: 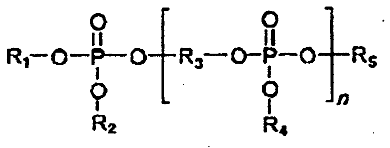 wherein R₁, R₂, R₄, and R₅ are independently C₆∼C₂₀ aryl group or an alkyl-substituted C₆∼C₂₀ aryl group, R₃ is a derivative of a dialcohol comprising resorcinol, hydroquinol, bisphenol-A, or bisphenol-S; and n is 0∼5.

10. The flameproof thermoplastic resin composition as defined in any one of claims 1-9, further comprising anti-dripping agents, impact modifiers, antioxidants, plasticizers, heat stabilizers, light stabilizers, compatibilizers, pigments, dyes, inorganic fillers or mixtures of at least two thereof.

11. A molded article prepared with the flameproof thermoplastic resin composition as defined in any one of claims 1-9.

## Patentansprüche

1. Flammfeste thermoplastische Harzzusammensetzung, umfassend:
(A) 5-40 Gewichtsteile eines kautschukmodifizierten aromatischen Vinylcopolymerharzes;
(B) 30∼90 Gewichtsteile eines Polycarbonatharzes;
(C) 1-60 Gewichtsteile eines Polyesterharzes, umfassend (c1) 0,01∼99 Gew.-% eines semikristallinen Polyesterharzes und (c2) 1-99,99 Gew.-% eines nichtkristallinen Polyesterharzes; und
(D) 5-30 Gewichtsteile einer aromatischen Phosphatesterverbindung pro 100 Gewichtsteile eines (A), (B) und (C) umfassenden Basisharzes.

2. Flammfeste thermoplastische Harzzusammensetzung nach Anspruch 1, wobei das kautschukmodifizierte aromatische Vinylcopolymerharz (a1) 20-100 Gewichtsteile eines aromatischen Vinylpfropfcopolymerharzes und (a2) 0∼80 Gewichtsteile eines aromatischen Vinylcopolymerharzes umfasst.

3. Flammfeste thermoplastische Harzzusammensetzung nach Anspruch 2, wobei das aromatische Vinylpfropfcopolymerharz (a1) ein Pfropfcopolymer von 10∼60 Gewichtsteilen eines Kautschukpolymers, 20-80 Gewichtsteilen eines aromatischen Vinylmonomers und 5-45 gewichtsteilen eines mit dem aromatischen Vinylmonomer copolymerisierbaren Monomers ist; und das aromatische Vinylcopolymerharz (a2) ein Copolymer von 50-95 Gewichtsteilen eines aromatischen Vinylmonomers und 5-50 Gewichtsteilen eines mit dem aromatischen Vinylmonomer copolymerisierbaren Monomers ist.

4. Flammfeste thermoplastische Harzzusammensetzung nach Anspruch 3, wobei das Kautschukpolymer ausgewählt ist aus der Gruppe, bestehend aus Dienkautschuks, wobei an die Dienkautschuks Wasserstoff addiert ist, Isoprenkautschuks, Chloroprenkautschuks, Acrylkautschuks, Ethylen/Propylen/Dienterpolymeren (EPDM) und Gemischen von mindestens Zweien davon; und das aromatische Vinylmonomer ausgewählt ist aus der Gruppe, bestehend aus Styrol, α-Methylstyrol, kernsubstituiertem Styrol und Gemischen von mindestens Zweien davon; und das mit dem aromatischen Vinylmonomer copolymerisierbare Monomer ausgewählt ist aus der Gruppe, bestehend aus Acrylnitril, Methylmethacrylnitril, Methylmethacrylat, N-substituiertem Maleimid, Maleinsäureanhydrid und Gemischen von mindestens Zweien davon.

5. Flammfeste thermoplastische Harzzusammensetzung nach Anspruch 1, wobei das kautschukmodifizierte aromatische Vinylcopolymerharz (A) ausgewählt ist aus der Gruppe, bestehend aus Acrylnitril-Butadien-Styrol-Copolymerharz (ABS), Acrylnitril-Styrol-Acrylkautschuk-Copolymerharz (ASA), Acrylnitril-Ethylenpropylenkautschuk-Styrol-Copolymerharz (AES) und Gemischen von mindestens Zweien davon.

6. Flammfeste thermoplastische Harzzusammensetzung nach Anspruch 1, wobei das semikristalline Polyesterharz (c1) Polyalkylenterephthalat oder Polyalkylennaphthalat ist.

7. Flammfeste thermoplastische Harzzusammensetzung nach Anspruch 6, wobei das semikristalline Polyesterharz (c1) ausgewählt ist aus der Gruppe, bestehend aus Polyethylenterephthalat (PET), Polybutylenterephthalat (PBT), Polycyclohexanterephthalat (PCT), Polyethylennaphthalat (PEN) und Gemischen davon.

8. Flammfeste thermoplastische Harzzusammensetzung nach Anspruch 1, wobei das nichtkristalline Polyesterharz (c2) Poly(alkylen-1,4-cyclohexandimethylenterephthalat) ist.

9. Flammfeste thermoplastische Harzzusammensetzung nach Anspruch 1, wobei die aromatische Phosphatesterverbindung (D) durch die folgende Formel dargestellt ist. 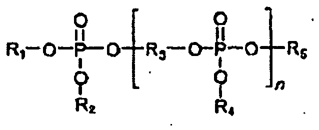 wobei R₁, R₂, R₄ und R₅ unabhängig eine C₆∼C₂₀-Arylgruppe oder eine alkylsubstituierte C₆∼C₂₀-Arylgruppe sind, R₃ ein Derivat oder ein Dialkohol, umfassend Resorcinol, Hydrochinol, Bisphenol-A oder Bisphenol-S ist; und n 0-5 ist.

10. Flammfeste thermoplastische Harzzusammensetzung, wie in einem der Ansprüche 1-9 definiert, des Weiteren umfassend Tropfhemmer, Schlagmodifikatoren, Antioxidationsmittel, Weichmacher, Wärmestabilisatoren, Lichtstabilisatoren, Verträglichmacher, Pigmente, Farbstoffe, anorganische Füllstoffe oder Gemische von mindestens Zweien davon.

11. Formgegenstand, der mit der wie in einem der Ansprüche 1-9 definierten flammfesten thermoplastischen Harzzusammensetzung hergestellt ist.

## Revendications

1. Composition ignifugée de résines thermoplastiques, comprenant :
A) de 5 à 40 parties en poids d'une résine de copolymère de composé vinyl-aromatique, modifié avec un caoutchouc ;
B) de 30 à 90 parties en poids d'une résine de polycarbonate ;
C) de 1 à 60 parties en poids d'une résine de polyester comprenant c1) 0,01 à 99 % en poids d'une résine de polyester semi-cristallin, c2) et 1 à 99,99 % en poids d'une résine de polyester non-cristallin ;
D) et de 5 à 30 parties en poids d'un composé de type ester phosphate aromatique, pour 100 parties en poids de résine de base comprenant les composants (A), (B) et (C).

2. Composition ignifugée de résines thermoplastiques, conforme à la revendication 1, dans laquelle ladite résine de copolymère de composé vinyl-aromatique, modifié avec un caoutchouc, comprend
a1) de 20 à 100 parties en poids d'une résine de copolymère de greffage de composé vinyl-aromatique,
a2) et de 0 à 80 parties en poids d'une résine de copolymère de composé vinyl-aromatique.

3. Composition ignifugée de résines thermoplastiques, conforme à la revendication 2, dans laquelle
- ladite résine (a) de copolymère de greffage de composé vinyl-aromatique est un copolymère de greffage de 10 à 60 parties en poids d'un polymère de type caoutchouc, 20 à 80 parties en poids d'un monomère vinyl-aromatique, et 5 à 45 parties en poids d'un monomère copolymérisable avec le monomère vinyl-aromatique ;
- et ladite résine (a2) de copolymère de composé vinyl-aromatique est un copolymère de 50 à 95 parties en poids d'un monomère vinyl-aromatique et de 5 à 50 parties en poids d'un monomère copolymérisable avec le monomère vinyl-aromatique.

4. Composition ignifugée de résines thermoplastiques, conforme à la revendication 3, dans laquelle
- ledit polymère de type caoutchouc est choisi dans l'ensemble formé par les caoutchoucs de diène, les caoutchoucs saturés formés par addition d'hydrogène sur lesdits caoutchoucs de diène, les caoutchoucs d'isoprène, les caoutchoucs de chloroprène, les caoutchoucs de composés acryliques, et les terpolymères d'éthylène, de propylène et de diène (terpolymères EPDM), ainsi que les mélanges d'au moins deux de ces caoutchoucs ;
- ledit monomère vinyl-aromatique est choisi dans l'ensemble formé par le styrène, l'α-méthyl-styrène et les dérivés du styrène à substituant(s) placé(s) sur le cycle, ainsi que les mélanges d'au moins deux de ces composés ;
- et ledit monomère copolymérisable avec le monomère vinyl-aromatique est choisi dans l'ensemble constitué par l'acrylonitrile, le méthacrylonitrile, le méthacrylate de méthyle, les dérivés de maléimide à substituant placé sur l'atome d'azote, et l'anhydride maléique, ainsi que les mélanges d'au moins deux de ces composés.

5. Composition ignifugée de résines thermoplastiques, conforme à la revendication 1, dans laquelle ladite résine (A) de copolymère de composé vinyl-aromatique, modifié avec un caoutchouc, est choisie dans l'ensemble formé par une résine de copolymère acrylonitrile-butadiène-styrène (ABS), une résine de copolymère acrylonitrile-styrène-caoutchouc d'acrylique (ASA), et une résine de copolymère acrylonitrile-(caoutchouc d'éthylène/propylène)-styrène (AES), ainsi que les mélanges de telles résines au nombre d'au moins deux.

6. Composition ignifugée de résines thermoplastiques, conforme à la revendication 1, dans laquelle ladite résine de polyester semi-cristallin (c1) est un poly(alkylène téréphtalate) ou un poly(alkylène naphtalate).

7. Composition ignifugée de résines thermoplastiques, conforme à la revendication 6, dans laquelle ladite résine de polyester semi-cristallin (c1) est choisie dans l'ensemble formé par un poly(éthylène téréphtalate) (PET), un poly(butylène téréphtalate) (PBT), un poly(cyclo-hexylène téréphtalate) (PCT), et un poly(éthylène naphtalate) (PEN), ainsi que les mélanges de tels polymères.

8. Composition ignifugée de résines thermoplastiques, conforme à la revendication 1, dans laquelle ladite résine de polyester non-cristallin (c2) est un poly(alkylène/1,4-cyclohexylène-diméthylène téréphtalate).

9. Composition ignifugée de résines thermoplastiques, conforme à la revendication 1, dans laquelle ledit composé de type ester phosphate aromatique (D) est représenté par la formule suivante : 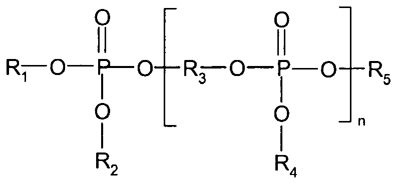 dans laquelle R₁, R₂, R₄ et R₅ représentent chacun, indépendamment, un groupe aryle en C₆-C₂₀ ou un groupe aryle en C₆-C₂₀ à substituant(s) alkyle, R₃ représente un groupe dérivé d'un diol qui est le résorcinol, l'hydroquinone, le bisphénol A ou le bisphénol S, et l'indice n vaut de 0 à 5.

10. Composition ignifugée de résines thermoplastiques, conforme à l'une des revendications 1 à 9, qui comprend en outre des agents anti-égouttement, des modificateurs de résistance aux chocs, des antioxydants, des plastifiants, des agents thermo-stabilisants, des agents photo-stabilisants, des agents de compatibilisation, des pigments, des colorants, ou des charges inorganiques, ou des mélanges d'adjuvants d'au moins deux de ces types.

11. Article moulé, préparé avec une composition ignifugée de résines thermoplastiques, conforme à l'une des revendications 1 à 9.
